# EUROPEAN PATENT APPLICATION

(11) **EP 4 556 850 A1**
(43) Date of publication of application: **21.05.2025**
(21) Application number: 23210597.3
(22) Date of filing: 17.11.2023
(51) Int. Cl.: G01C 15/00, G01S 17/66

(54) **METHOD FOR OPERATING A SURVEYING INSTRUMENT TO TRACK A TARGET**

(71) Applicant: Hilti Aktiengesellschaft, 9494 Schaan (LI)
(72) Inventor: Cieslak, Rafal, 6800 Feldkirch (AT); Winter, Andreas, 6800 Feldkirch (AT); Gogolla, Torsten, 9494 Schaan (LI); Bellusci, Giovanni, 9470 Buchs (CH)
(74) Representative: Hilti Aktiengesellschaft Corporate Intellectual Property

(57) **Abstract**

Computer-implemented method for operating a surveying instrument to track a target in a worksite, in which the surveying instrument and the target are deployed, comprising the steps: Instructing the tracking light source to emit tracking light, instructing the tracking camera to capture a first image, which shows the target to be tracked, instructing the drive system to rotate the measuring head to an orientation, in which, in the first image, a virtual indicator is aligned to the target, in that orientation, instructing the distance measuring device to measure a distance value of the surveying instrument to the target, computing a first angle gap in the first plane and/or a second angle gap in the second plane based on the distance value of the surveying instrument to the target and on the first offset, and instructing the drive system to rotate the support about the first angle gap and/or the measuring head about the second angle gap.

## Description

The present invention relates to a computer-implemented method for operating a surveying instrument to track a target according to the definition of claim 1, a computer program according to the definition of claim 11, and to an apparatus according to the definition of claim 12.

### Background of the invention

In surveying instruments, the use of a camera may provide for improved user convenience and new functions. Particularly, a view such as an image or a video feed provided by the camera and shown on a display of the surveying instrument may be used for assisting target selection, target tracking and for providing the operator with an overview of potential points of interest.

For a surveying instrument, in which the camera center and the instrument center are eccentric, the center of the image captured by the camera does not coincide with the point which is measured by the distance measurement capabilities of the surveying instrument. In order to correctly draw a virtual indicator, such as a crosshair, in the displayed camera image at the correct measurement position, the target distance should be considered. For a hypothetical target distance equal to infinity, the eccentricity of the camera can be ignored, and the virtual crosshair can be drawn at the principal point of the camera, typically at the center of the camera image. However, as the target distance decreases, the correct position of the virtual crosshair moves further and further away from the principal point due to the camera eccentricity.

### Summary of the invention

Therefore, what is desired is a method for operating a surveying instrument to track a target in a worksite that allows to compensate the offset between the targeting axis of a distance measuring device and the camera axis of a tracking camera automatically without a user interaction.

These objectives are achieved by realizing the features of the independent claims. Features which further develop the invention in an advantageous manner are described in the dependent claims.

According to an aspect of the present invention, there is provided a computer-implemented method for operating a surveying instrument to track a target in a worksite, in which the surveying instrument and the target are deployed, the surveying instrument comprising a base, a support being rotatable with respect to the base about a first axis of rotation, a measuring head being rotatable with respect to the support about a second axis of rotation, a drive system configured to rotate the support about the first axis of rotation and/or the measuring head about the second axis of rotation, a first angle encoder configured to determine a first angle in a first plane with respect to a rotation of the support about the first axis of rotation, a second angle encoder configured to determine a second angle in a second plane with respect to a rotation of the measuring head about the second axis of rotation, and a computer system having evaluation, data processing and/or control functionality, wherein the measuring head includes a distance measuring device configured to emit a distance measuring beam defining a targeting axis, a tracking light source configured to emit tracking light, and a tracking camera having a first field of view, a first camera axis arranged with a first offset to the targeting axis, and a first camera center. The method is performed by the computer system and comprises the steps:
▪ Instructing the tracking light source to emit tracking light,
▪ Instructing the tracking camera to capture a first image, which shows the target to be tracked,
▪ Instructing the drive system to rotate the measuring head to an orientation, in which, in the first image, a virtual indicator is aligned to the target,
▪ In that orientation, instructing the distance measuring device to measure a distance value of the surveying instrument to the target,
▪ Computing a first angle gap in the first plane and/or a second angle gap in the second plane based on the measured distance value of the surveying instrument to the target and on the first offset, and
▪ Instructing the drive system to rotate the support about the first angle gap and/or the measuring head about the second angle gap.

The method according to the present invention allows to compensate the offset between the tracking camera and the distance measuring device due to the eccentricity of the tracking camera automatically without any interaction with the operator. When the method according to the present invention has been performed, the offset between the camera axis and targeting axis is compensated and the surveying instrument can be used to track the target in the worksite automatically.

The method is characterized in that the drive system is instructed to rotate the measuring head to an orientation, in which, in the first image, a virtual indicator is aligned to the target, wherein the virtual indicator indicates a laser spot on the first image generated by the distance measuring beam. The rotation can be calculated for example by determining a pixel difference between the position of the target and the virtual indicator on a pixelated image sensor of the tracking camera. In that orientation, the distance measuring device is instructed to measure a distance value of the surveying instrument to the target. The correction is computed by the computer system via trigonometric based on the distance value of the surveying instrument to the target and on the first offset. If the first offset has a component in the first plane and/or second plane, a first angle gap and/or a second angle gap is computed. To compensate the effect of eccentricity, the drive system is instructed to rotate the support about the first angle gap and/or the measuring head about the second angle gap.

Preferably, the method further comprises that upon rotating the support about the first angle gap and/or the measuring head about the second angle gap, the distance measuring device is instructed by the computer system to measure an updated distance value. The calculation of the correction can be repeated by the computer system using the updated distance value.

Preferably, upon rotating the support about the first angle gap and/or the measuring head about the second angle gap, a tracking functionality of the surveying instrument to track the target is activated by the computer system. The surveying instrument can track the target and perform distance and angle measurements to the target.

In a first preferred embodiment, the first camera axis is arranged parallel to the targeting axis. By using an optical system for the surveying instrument having parallel targeting and camera axes, the optical paths of the distance measuring device and the tracking camera are separated and can be individually adapted to the specific requirements of the distance measuring device and the tracking camera.

In a second preferred embodiment, the first camera axis is inclined to the targeting axis at a first inclination angle different from 0°, and the first offset is defined as normal spacing of the targeting axis running through the first camera center. By using an inclined first camera axis the effort to compensate the first offset can be reduced. The first inclination angle is different from 0° and typically in the range of less than 1°. The first inclination angle is selected such that for a target distance equal to infinity the offset distance is zero and decreases with increasing distance between the surveying instrument and the target.

Preferably, the measuring head further includes a second camera having a second field of view, a second camera axis arranged with a second offset to the targeting axis, and a second camera center. Preferably, the second field of view is larger than the first field of view of the tracking camera. The second camera can be used to find the target to be tracked easier. The tracking camera is preferably operating in the infrared spectrum, and the second camera can be a so-called aiming camera operating in the visible spectrum or a so-called finding camera operating in the infrared spectrum.

Preferably, the method further comprises the following steps performed by the computer system:
▪ Instructing the second camera to capture a second image,
▪ Instructing a display unit of the surveying instrument to display the second image,
▪ Waiting for a selection of the target to be tracked in the displayed second image, and
▪ Upon selection of the target to be tracked, performing the steps of the method according to the present invention.

The second camera can be used to find the target to be tracked easier. A second image can be captured by the second camera and shown on the display unit. The selection of the target to be tracked in the displayed second image can be done by the operator for example by clicking or tipping, or alternatively automatically by the computer system via image processing.

Preferably, a target identification algorithm is performed by the computer system using the second image, and the display unit is instructed by the computer system to project a graphical representation of the identified targets onto the second image.

In a preferred embodiment, the measuring head further comprises a second light source configured to emit second light. The second light source can support the process to find the target to be tracked in all ambient lighting conditions, even in darkness. Preferably, the second light source is adapted to the second camera, such as an infrared light source for a finding camera or a white light source for an aiming camera. Wavelengths of approximately 380 to 750 nm are considered to operate in the visible spectrum, and wavelengths of approximately 780 nm to 1 mm are considered to operate in the infrared spectrum.

Preferably, the second light is different from the tracking light, preferably the tracking light having a wavelength in the infrared spectrum and the second light having a wavelength in the visible spectrum. Light sources emitting wavelengths of approximately 380 to 750 nm are considered to operate in the visible spectrum, and light sources emitting wavelengths of approximately 780 nm to 1 mm are considered to operate in the infrared spectrum.

According to a further aspect of the present invention, there is provided a computer program comprising instructions, which, when executed by a computer system, cause the computer system to carry out the method according to the present invention.

The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a surveying instrument deployed at a worksite, the surveying instrument comprising a measuring unit mounted on a tripod and a remote controller connected via a communication link to the measuring unit,
- FIGS. 2A, B: show an exemplary version of the measuring unit used in the surveying instrument of FIG. 1 (FIG. 2A) and a block diagram of the main components of the surveying instrument (FIG. 2B),
- FIG. 3: shows the optical components of the measuring unit used in the surveying instrument of FIG. 1 in an exemplary version,
- FIG. 4: shows an exemplary version of a method for operating a surveying instrument according to the present invention in a flow chart, and
- FIGS. 5A, B: show schematically an image captured by the tracking camera.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

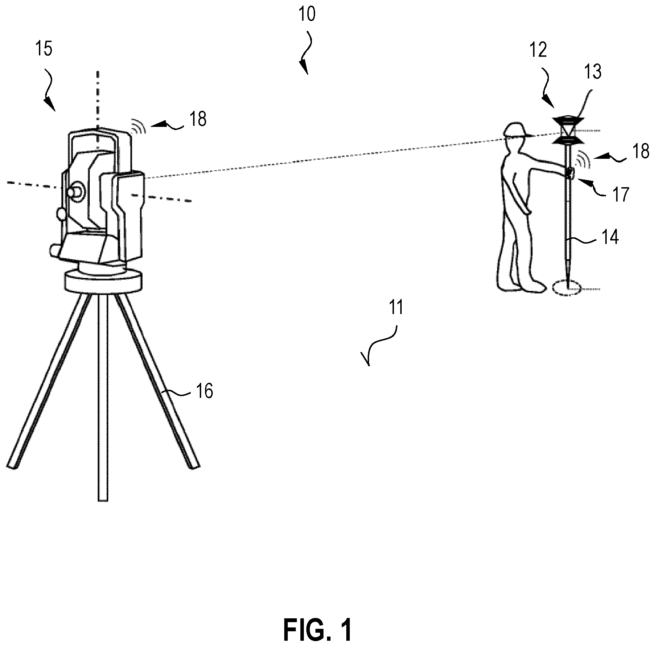

**FIG. 1** shows an operator using a surveying instrument **10** deployed at a worksite **11.** The worksite 11 may be a construction site, inside or outside, or a surveying site, amongst others. In addition to the surveying instrument 10, a target **12** that is remote from the surveying instrument 10 is deployed at the worksite 11. The target 12 can include a reflector **13,** such as a prism and/or a cat-eye, that is mounted on top of a pole **14.**

The surveying instrument 10 is formed as a total station and comprises a measuring unit **15** that is mounted on a mounting support structure in the form of a tripod **16.** The surveying instrument 10 also comprises a removable control panel in the form of a remote controller **17** that can be used for remote control of the measuring unit 15 via a wireless connection **18.**

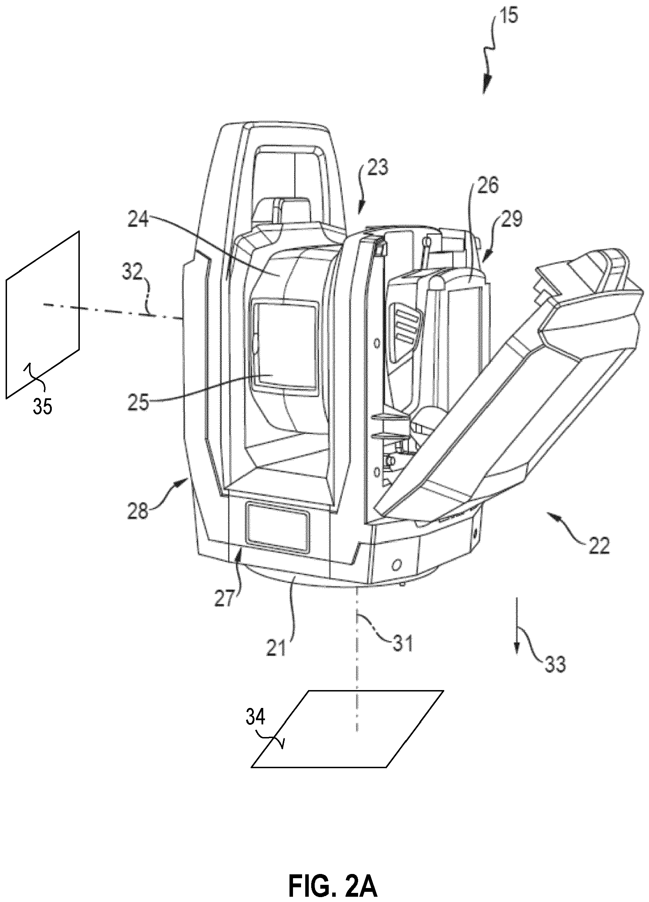

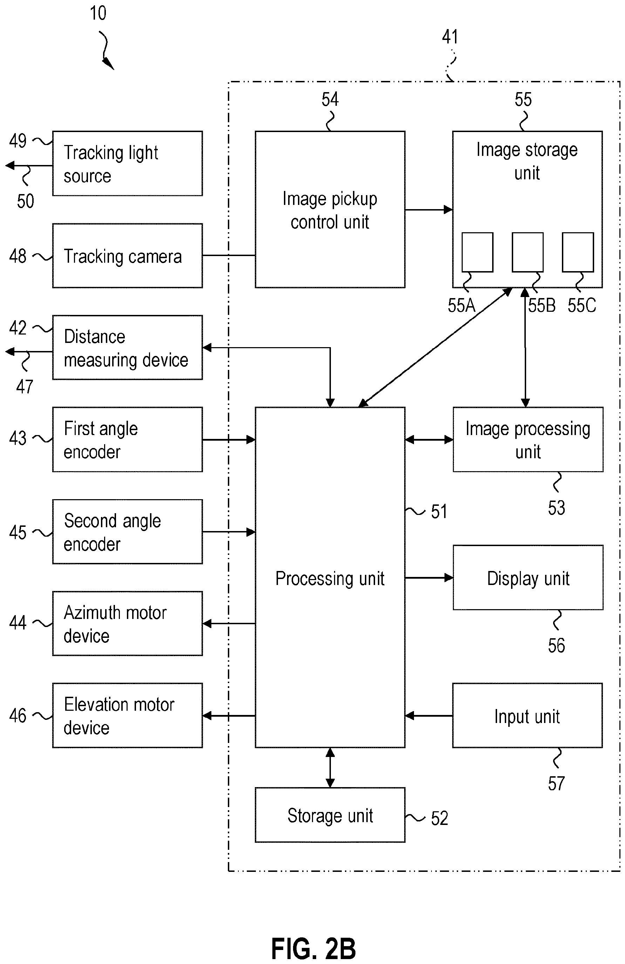

**FIGS. 2A****, B** show an exemplary version of the measuring unit 15 used in the surveying instrument 10 of FIG. 1 in a perspective view (FIG. 2A) and a block diagram of the main components of the surveying instrument 10 (FIG. 2B).

The surveying instrument 10 is designed as robotic total station and the measuring unit 15 comprises a base **21,** a support **22,** and a measuring head **23.** The measuring head 23 is enclosed by a housing **24,** which includes an exit window **25.** In the housing 24, a distance measuring device that can emit a distance measuring beam and a tracking device that can emit tracking light are arranged. The distance measuring beam and the tracking light are emitted through the exit window 25 to leave the housing 24.

In the exemplary version of FIG. 2A, the support 22 is U-formed and includes a bottom portion **27,** a first side portion **28,** and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33,** and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane **34** perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane **35** perpendicular to the second axis of rotation 32. To make the instrument 12 fully automatic, a self-leveling device, which may be arranged in the bottom portion 27 of the support 22, can be included.

FIG. 2B shows a block diagram of the main components of the total station 10. The total station 10 includes a control device **41,** a distance measuring device **42,** a first angle encoder **43,** an azimuth motor device **44,** a second angle encoder **45,** and an elevation motor device **46.** The main components 41, 42, 43, 44, 45, and 46 are mandatory for a robotic total station, whereas a manual total station does not include the azimuth motor device 44 and the elevation motor device 46. The azimuth motor device 44 and the elevation motor device 46 are summarized as drive system of the measuring unit 15.

The distance measuring device 42 may include a laser transmitter, a laser driver circuit, a photosensor, and a laser receiver interface circuit. The laser driver circuit provides current for the laser transmitter which emits a distance measuring beam **47.** The photosensor receives at least a part of the distance measuring beam 47 reflected at a target or a surface of the worksite, and the current signal that is outputted by the photosensor is directed to the laser receiver interface circuit. After appropriate amplification and demodulation, the signal is sent via to the control device 41.

The first angle encoder 43 provides signals to the control device 41, so that it knows exactly in which first angle the distance measuring beam 47 is arranged in the first plane 34, and the second angle encoder 45 provides signals to the control device 41, so that it knows exactly in which second angle the distance measuring beam 47 is arranged in the second plane 35.

Angle encoders that can provide the required accuracies for the total station 10 are magnetic encoders or optical encoders. Optical encoders use a transmissive scale disc made out of glass or plastic with an LED illumination on one side of the scale and an image or line sensor on the other side of the scale; the scale has a code to provide absolute readings on any angle. US 7,589,313 B2 describes a possible encoder technology that can be used for the first and second angle encoders.

The azimuth motor device 44 may include an azimuth motor, which is the motive force to rotate the main housing 22 of the measuring unit 15 about the first axis of rotation 31, and an azimuth motor driver circuit, which will provide the proper current and voltage to drive the azimuth motor. The elevation motor device 46 may include an elevation motor, which is the motive force to pivot the measuring head 23 about the second axis of rotation 32, and an elevation motor driver circuit, which will provide the proper current and voltage to drive the elevation motor.

In order to track a target, such as the target 12 in FIG. 1 automatically via the total station 10, the total station 10 includes a tracking camera **48** and a tracking light source **49** that emits tracking light **50.** The tracking camera 48 is used to enable measuring to static reflective targets and tracking of moving reflective targets. The tracking camera 48 gives information about the center of gravity of a target and this information is used to steer the drive system to direct the distance measuring beam 47 on the center of the target and to measure the 3D coordinates of the target. In order to track reflective targets in all ambient lighting conditions, even in darkness, the tracking light source 49 is used to produce the necessary illumination for the tracking camera 48. The tracking camera 48 should have a filter that fits to the wavelength of the tracking light source 49.

The control device 41 primarily comprises a processing unit **51,** a storage unit **52,** an image processing unit **53,** an image pickup control unit **54,** an image storage unit **55,** a display unit **56,** and an input unit **57.** The processing unit 51, the image processing unit 53, and the image pickup control unit 54 define a computer system having evaluation, data processing and/or control functionality for the surveying instrument 10.

In the storage unit 52, there may be a program storage area for different types of computer programs and a data storage area for storing data such as the results of the distance and angle measurements. In the program storage area, various types of computer programs may be stored. These computer programs can include a calculating program for calculating coordinates from the distance and angle measurements, image processing programs for performing image processing, a sequence program for selecting a point of interest in an image, for executing the distance measurement on the selected point of interest, a tracking program for tracking a reflector target, a search program for searching a reflector target when the target is missed out of sight, and other programs.

The image storage unit 55 may include a first image storage unit **55A,** a second image storage unit **55B,** and a third image storage unit **55C.** An image when the tracking light source 49 is turned on and an image when the tracking light source 49 is turned off may be acquired by the tracking camera 48 and by turning-on and turning-off operation of an electronic shutter in synchronization with the flashing of the tracking light source 49. The image data when the tracking light 50 is turned on can be stored in the first image storage unit 55A, and the image data when the tracking light 50 is turned off can be stored in the second image storage unit 55B. The image processing unit 53 subtracts the image data when the tracking light 50 is turned off as stored in the second image storage unit 55B from the image data when the tracking light 50 is turned on as stored in the first image storage unit 55A and acquires only the target image. The image data of the target image thus acquired is stored on the third image storage unit 55C.

The control device 41 comprises the display unit 56 for showing images captured by a camera. The display unit 56 may be an integral part of the measuring unit 15, but more preferably, the display unit 56 is included in the remote controller 17 that can be used for remote control of the total station 10. It is even conceivable that the total station 10 is fully remote controlled, wherein the display unit 56 may be in the form of a computer screen far away, and wherein information to and from the total station 10 are transferred over a wireless network. The display unit 56 may include a screen, a touch screen, etc.

The control device 41 comprises the input unit 57 that may be an integral part of the measuring unit 15, but more preferably, the input unit 57 is included in the remote controller 17 that can be used for remote control of the total station 10. The input unit 57 may include various input elements, such as a mouse, a keyboard, a touchscreen, etc.

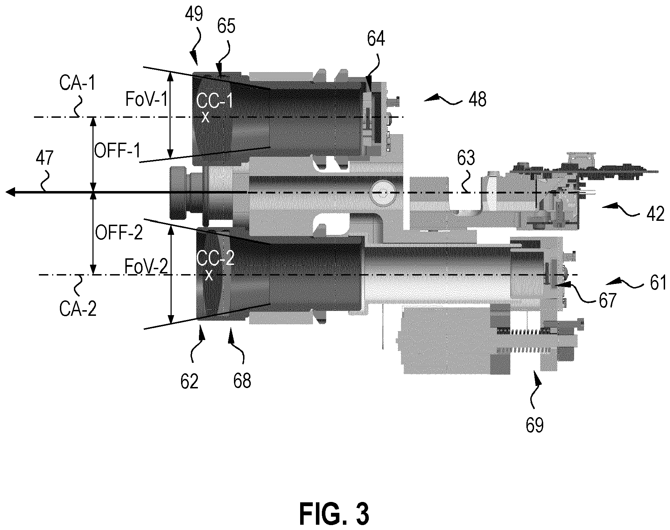

**FIG. 3** shows the optical components of the measuring head 23 in an exemplary version. The measuring head 23 includes the distance measuring device 42, the tracking camera 48, and the tracking light source 49.

Optionally, the measuring head 23 can include a second camera **61** and a second light source **62.** The second camera 61 can be an aiming camera that is working in the visible spectrum, or the second camera can be a finding camera that is working in the infrared spectrum. The wavelength of the second light source 62 should fit to the second camera 61.

The distance measuring device 42 emits the distance measuring beam 47 defining a targeting axis **63.** The tracking camera 48 includes a first image sensor **64** and a first optical lens **65.** The tracking camera 48 has a first field of view **FoV-1,** a first camera axis **CA-1,** and a first camera center **CC-1.** The first camera axis CA-1 is arranged with a first offset **OFF-1** to the targeting axis 63. In the exemplary version, the focal length of the tracking camera 48 is fixed; alternatively, the focal length of the tracking camera 48 may be adaptable within a range between a minimum focal length and a maximum focal length.

Typical image sensors used for tracking cameras are monochrome or RGB-Bayer-filter CMOS sensors with small pixels and global shutter. To enable a smooth tracking even with fast moving reflective targets, the field of view should not be too small. A wider field of view is better for finding, re-finding, and tracking at short distances, but could be problematic for resolution.

The optionally second camera 61 may include a second image sensor **67** and a second optical lens **68.** The focus of the second camera 61 can be changed for example by using a controllable liquid optical lens, by moving the lens block, and/or by moving the image sensor. In the exemplary version, the focal length of the second camera 61 is adaptable by a motor **69** moving the image sensor 67 within a range between a minimum focal length and a maximum focal length. The second camera 61 can have a second field of view **FoV-2,** a second camera axis **CA-2,** and a second camera center **CC-2.** The second camera axis CA-2 is arranged with a second offset **OFF-2** to the targeting axis 63.

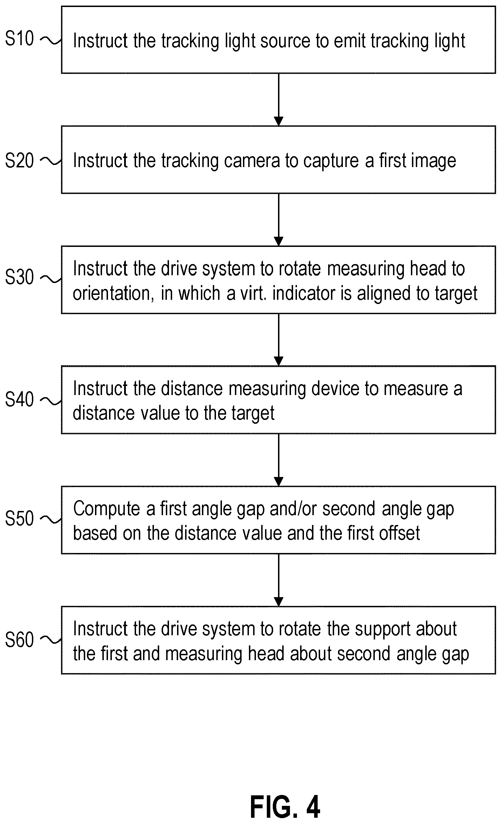

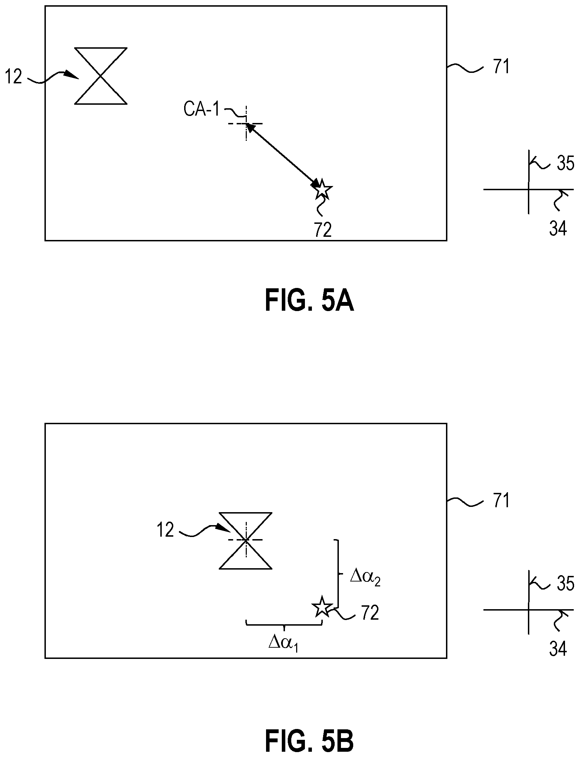

**FIG. 4** shows a method for operating a surveying instrument according to the present invention in a flow chart, and **FIGS. 5A****, B** show an image captured by the tracking camera 48 that is used in the method. The method is performed by the computer system 51, 53, 54 and comprises the following steps:
▪ Instructing the tracking light source 49 to emit tracking light 50 (step **S10**),
▪ Instructing the tracking camera 48 to capture a first image **71,** which shows the target 12 to be tracked (step **S20**),
▪ Instructing the drive system 44, 46 to rotate the measuring head 23 to an orientation, in which, in the first image 71, a virtual indicator **72,** which is projected onto the first image, is aligned to the target 12 (step **S30**), preferably to the center or any other predefined area of the target 12,
▪ In that orientation, instructing the distance measuring device 42 to measure a distance value of the surveying instrument 10 to the target 12 (step **S40**),
▪ Computing a first angle gap Δα₁ in the first plane 34 and/or a second angle gap Δα₂ in the second plane 35 based on the measured distance value of the surveying instrument 10 to the target 12 and on the first offset OFF-1 (step **S50**), and
▪ Instructing the drive system 44, 46 to rotate the support 22 about the first angle gap Δα₁ and/or the measuring head 23 about the second angle gap Δα₂ (step **S60**).

FIG. 5A shows the first image 71 that is captured by the tracking camera 48 (step S20) and that can optionally be shown on the display unit 56 of the total station 10. Based on that first image 71, the azimuth motor device 44 and elevation motor device 46 are instructed to rotate the measuring head 23 to an orientation, in which the virtual indicator 72 is aligned to the target 12 (step S30) as shown in FIG. 5B. In that orientation, the distance measuring device 42 Is instructed to measure a distance value of the surveying instrument 10 to the target 12.

Due to the eccentricity of the tracking camera 48 to the distance measuring device 42, a laser spot that is generated by the distance measuring beam 47 and represented by the virtual indicator 72 does not coincide with the first camera axis CA-1 of the tracking camera 48. To consider the eccentricity, the computer system computes the first angle gap Δα₁ in the first plane 34 and/or the second angle gap Δα₂ in the second plane 35 based on a distance value of the total station 10 to the target 12 and on the first offset OFF-1 (step S50). In order to compensate the first and/or second angle gaps Δα₁, Δα₂, the azimuth motor device 44 is instructed to rotate the support 22 about the first angle gap Δα₁ and/or the elevation motor device 46 is instructed to rotate the measuring head 23 about the second angle gap Δα₂ (step S60).

In order to support a user/operator to find the target 12 to be tracked, the second camera 61 and the second light source 62 can be used. The additional steps can be performed by the computer system before the steps S10 to S60 are performed:
▪ Instructing the second camera 61 to capture a second image,
▪ Instructing the display unit 56 to display the second image, and
▪ Waiting for a selection of the target to be tracked in the displayed second image.

Upon the selection of the target to be tracked, the steps S10 to S60 of the method according to the present invention are performed.

## Claims

1. A computer-implemented method for operating a surveying instrument (10) to track a target (12) in a worksite (11), in which the surveying instrument (10) and the target (12) are deployed, the surveying instrument (10) comprising a base (21), a support (22) being rotatable with respect to the base (21) about a first axis of rotation (31), a measuring head (23) being rotatable with respect to the support (22) about a second axis of rotation (32), a drive system (44, 46) configured to rotate the support (22) about the first axis of rotation (31) and/or the measuring head (23) about the second axis of rotation (32), a first angle encoder (43) configured to determine a first angle in a first plane (34) with respect to a rotation of the support (22) about the first axis of rotation (31), a second angle encoder (45) configured to determine a second angle in a second plane (35) with respect to a rotation of the measuring head (23) about the second axis of rotation (32), and a computer system (51, 53, 54) having evaluation, data processing and/or control functionality, wherein the measuring head (23) includes a distance measuring device (42) configured to emit a distance measuring beam (47) defining a targeting axis (63), a tracking light source (49) configured to emit tracking light (50), and a tracking camera (48) having a first field of view (FoV-1), a first camera axis (CA-1) arranged with a first offset (OFF-1) to the targeting axis, and a first camera center (CC-1), wherein the method for operating the surveying instrument is performed by the computer system (51, 53, 54) and comprises:
▪ Instructing the tracking light source (49) to emit tracking light (50),
▪ Instructing the tracking camera (48) to capture a first image (71), which shows the target (12) to be tracked,
▪ Instructing the drive system (44, 46) to rotate the measuring head (23) to an orientation, in which, in the first image (71), a virtual indicator (72) is aligned to the target (12),
▪ In that orientation, instructing the distance measuring device (42) to measure a distance value of the surveying instrument (10) to the target (12),
▪ Computing a first angle gap (Δα₁) in the first plane (34) and/or a second angle gap (Δα₂) in the second plane (35) based on the measured distance value of the surveying instrument (10) to the target (12) and on the first offset (OFF-1), and
▪ Instructing the drive system (44, 46) to rotate the support (22) about the first angle gap (Δα₁) and/or the measuring head (23) about the second angle gap (Δα₂).

2. The method of claim 1, wherein upon rotating the support (22) about the first angle gap (Δα₁) and/or the measuring head (23) about the second angle gap (Δα₂), the distance measuring device (42) is instructed by the computer system to measure an updated distance value.

3. The method of any one of claims 1 to 2, wherein upon rotating the support (22) about the first angle gap (Δα₁) and/or the measuring head (23) about the second angle gap (Δα₂), a tracking functionality of the surveying instrument (10) to track the target (12) is activated by the computer system.

4. The method of any one of claims 1 to 3, wherein the first camera axis (CA-1) is arranged parallel to the targeting axis (63).

5. The method of any one of claims 1 to 3, wherein the first camera axis (CA-1) is inclined to the targeting axis (63) at a first inclination angle (φ₁) different from 0°, and the first offset (OFF-1) is defined as normal spacing of the targeting axis (63) running through the first camera center (CC-1).

6. The method of any one of claims 1 to 5, wherein the measuring head (23) further includes a second camera (61) having a second field of view (FoV-2), a second camera axis (CA-2) arranged with a second offset (OFF-2) to the targeting axis (63), and a second camera center (CC-2).

7. The method of claim 6, further comprising the following steps performed by the computer system (51, 53, 54):
▪ Instructing the second camera (61) to capture a second image,
▪ Instructing a display unit (56) of the surveying instrument (10) to display the second image,
▪ Waiting for a selection of the target to be tracked in the displayed second image, and
▪ Upon selection of the target to be tracked, performing the steps of the method of claim 1.

8. The method of claim 7, wherein a target identification algorithm is performed by the computer system (51, 53, 54) using the second image, and the display unit (56) is instructed by the computer system (51, 53, 54) to project a graphical representation of the identified targets onto the second image.

9. The method of any one of claims 1 to 8, wherein the measuring head (23) further comprises a second light source (62) configured to emit second light.

10. The method of claim 9, wherein the second light is different from the tracking light (50), preferably the tracking light (50) having a wavelength in the infrared spectrum and the second light having a wavelength in the visible spectrum.

11. A computer program comprising instructions, which, when executed by a computer system (51, 53, 54), cause the computer system (51, 53, 54) to carry out the method according to any one of claims 1 to 10.

12. An apparatus comprising means for carrying out the method according to any one of claims 1 to 10.
